Europäisches Patentamt

European Patent Office

Office européen des brevets

(19)

(11) Veröffentlichungsnummer: **0 479 044 A1**

## (12) EUROPÄISCHE PATENTANMELDUNG

(21) Anmeldenummer: **91115816.0**

(22) Anmeldetag: **18.09.91**

(51) Int. Cl.5: **B60T 8/36**, B60T 13/68, F16K 31/06

(30) Priorität: **01.10.90 DE 4030979**
**14.12.90 DE 4040019**
**07.02.91 DE 4103694**

(43) Veröffentlichungstag der Anmeldung:
**08.04.92 Patentblatt 92/15**

(84) Benannte Vertragsstaaten:
**DE GB SE**

(71) Anmelder: **ROBERT BOSCH GMBH**
**Postfach 30 02 20**
**W-7000 Stuttgart 30(DE)**

(72) Erfinder: **Stumpe, Werner, Dipl.-Ing.**
**Ferdinand-Hanauer-Strasse 62**
**W-7000 Stuttgart 50(DE)**
Erfinder: **Emig, Reiner, Dipl.-Ing.**
**1-27-3 Minami-Senzoku**
**Ohta-ku, Tokyo 145(JP)**

(54) **Drucksteuerventil für eine elektropneumatische Bremsanlage.**

(57) Es wird ein Drucksteuerventil für eine elektropneumatische Bremsanlage vorgeschlagen, das, obwohl es aus zwei Ventilgruppen, einem Druckschaltventil (15) und einem Rückhalteventil (14) besteht, mit nur einem Elektro-Magneten betätigbar ist. Der Elektro-Magnet ist als Proportionalmagnet ausgebildet.

Das Drucksteuerventil ist zur Anwendung auf Nutzkraftfahrzeugen und Bussen bestimmt.

FIG. 4

EP 0 479 044 A1

## Stand der Technik

Die Erfindung bezieht sich auf ein Drucksteuerventil für eine elektro-pneumatische Bremsanlage nach der Gattung des Hauptanspruchs. Ein derartiges Drucksteuerventil ist bekannt (DE-OS 33 69 490).

Solche als Doppelventile ausgebildeten Drucksteuerventile haben den Nachteil, daß sie für ihre Schaltarbeit mindestens zwei Elektromagnete benötigen, wodurch die Einrichtung umständlich und teuer wird und außer einem hohen Gewicht den Mangel hat, daß sie auch viel Strom verbraucht.

## Vorteile der Erfindung

Das eingangs genannte Drucksteuerventil mit den kennzeichnenden Merkmalen des Hauptanspruchs hat demgegenüber den Vorteil, daß es nur einen Elektromagneten benötigt. Obwohl das Drucksteuerventil aus zwei völlig unterschiedlichen Ventilgruppen aufgebaut ist, sind mit dem einen Magneten alle Schaltungen der beiden Ventilgruppen auszuführen.

## Zeichnung

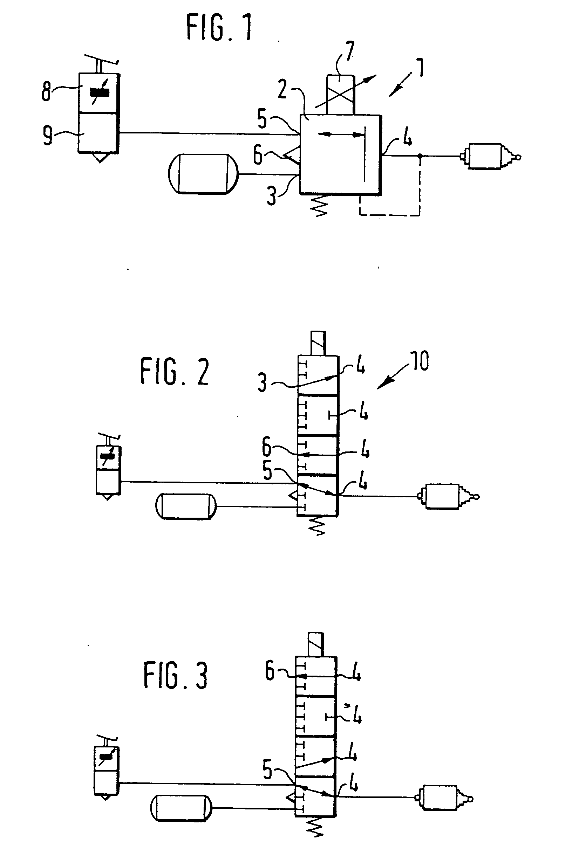

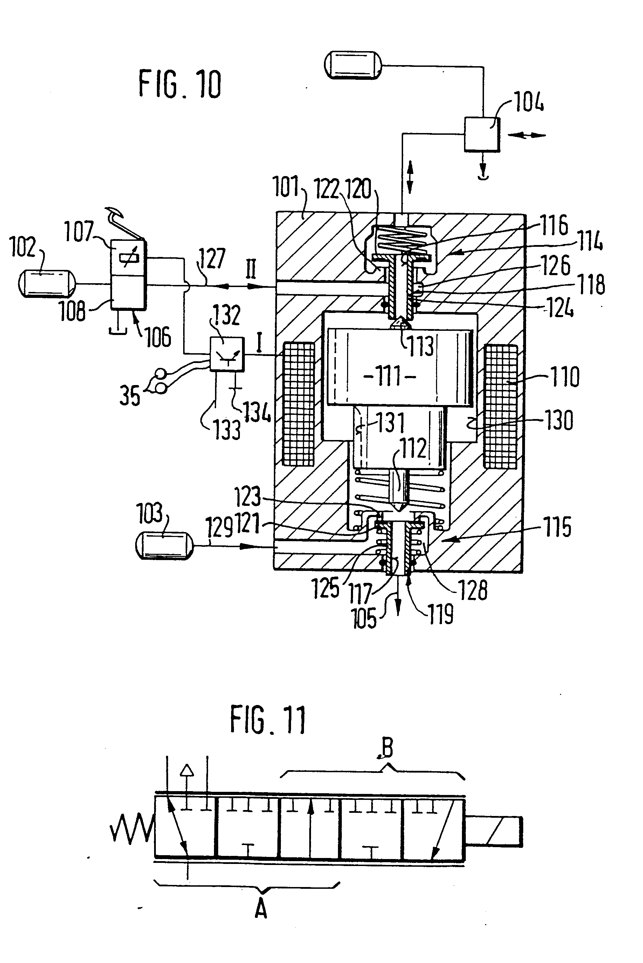

Mehrere Ausführungsbeispiele der Erfindung sind in der Zeichnung dargestellt und in der nachfolgenden Beschreibung näher erläutert. Es zeigen: Figur 1 eine erste Ausführung eines Drucksteuerventils, Figuren 2 und 3 zwei Schaltsymbole zweier Bauarten nach der Figur 1, die Figuren 4 bis 9 verschiedene mögliche Bauformen von Drucksteuerventilen mit integrierten 3/2-Ventilen, die Figuren 10 und 11 eine andere Ausführung des Drucksteuerventils.

## Beschreibung der Ausführungsbeispiele

Bei der eingangs zum Stand der Technik genannten DE-OS 33 69 490 gibt es z.B. bei dem Ausführungsbeispiel nach der Figur 2 eine elektro-pneumatische Bremsanlage mit zwei separaten Magnetventilen, einem stromlos offenen Rückhalteventil für den pneumatischen Druck und einem stromlos geschlossenen Druckschaltventil, das beim Bremsen bei intakter Elektrik im Brems- oder Bremslöse-Sinn umschaltbar ist.

Gewöhnlich wird beim Bremsen über die Elektrik mit dem zuletzt genannten Druckschaltventil gearbeitet, während das Rückhalteventil in Schließstellung bleibt. Fällt aber der Strom aus, schaltet das Rückhalteventil in seine stromlose Ausgangsstellung zurück und der an ihm anstehende, vorher zurückgehaltene Druck kann zu den Bremszylindern gelangen.

Die Figur 1 der vorliegenden Anmeldung zeigt nun ein Drucksteuerventil 1 mit einem Ventilgehäuse 2, vier Anschlüssen 3, 4, 5 und 6, einem Vorrats-Anschluß 3, einem Verbraucher-Anschluß 4, einem von einem elektro-pneumatischen Bremswertgeber 8 von dessem pneumatischen Teil herangeführten Rückhaltekreis-Anschluß 5 und einem Entlüftungs-Anschluß 6. Auf das Ventilgehäuse 2 ist ein einziger Elektro-Magnet 7 aufgesetzt, mit dem das Drucksteuerventil 1 als Proportionalventil zu betätigen ist.

Die Symbol-Darstelllung nach der Figur 2 läßt erkennen, daß ein entsprechendes Drucksteuerventil 10 beispielsweise als 4/4-Wege-Ventil ausgebildet ist. In einer ersten, stromlosen Stellung des Drucksteuerventils, die mit mechanischen Mitteln (Feder) erreicht wird, ist der Rückhaltekreis-Anschluß 5 an den Verbraucher-Anschluß 4 angeschlossen. In einer zweiten strombetätigten Stellung hat der Verbraucher-Anschluß 4 Verbindung mit der Außenluft (Leeren). In einer dritten strombetätigten Stellung sind alle Anschlüsse abgeriegelt und in einer vierten strombetätigten Stellung ist der Vorrats-Anschluß 3 mit dem Verbraucher-Anschluß 4 verbunden (Füllen). Beim Füllen und Leeren können in Verbindung mit einem Drucksensor die verschiedenen Stromstufen mit dem eingeregelten Druck in ihrem Niveau verändert werden.

Bei der Variante nach der Figur 3 sind bezüglich der Ausführung nach der Figur 2 lediglich die zwei Schaltstellungen, nämlich Schaltstellung vier (Leeren) und Schaltstelung zwei (Füllen) miteinander vertauscht.

Liegt durch Verwendung großvolumiger Verbraucher ein größerer Luftbedarf vor, wird vorteilhaft ein Relaisventil zwischengeschaltet. Daß in einem solchen Regelkreis auch noch Sensoren an den Bremsen, am Bremszylinder oder am Relaisventil verwendet werden können, soll im Zusammenhang mit der vorleigenden Erfindung hier nicht näher behandelt werden.

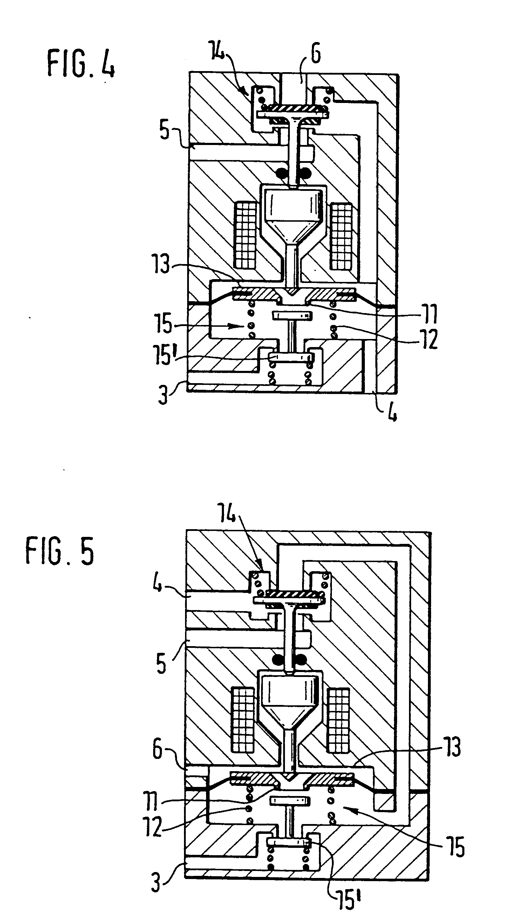

In den Figuren 4 bis 9 sind - jeweils zu einem magnetbetätigten Ventil integriert - verschiedene Kombinationen von Rückhalteventil und Druckschaltventil dargestellt.

Wie die Darstellungen zeigen, sind die einzelnen Ventilelemente und Ventilgruppen bei den verschiedenen Ausführungen beliebig kombinierbar.

Die Figuren 4 bis 9 zeigen zwei verschiedene aber gängige Proportional-Ventil-Ausführungen (Druckschaltventile) für die Funktionen Druck erhöhen, halten, ablassen. Einmal ein kleines, nicht entlastetes Ventil und einen Reaktionskolben, auf den der Magnet einwirkt (Figur 4, 5, 6, 7). Das andere Mal einen entlasteten Einlaßsitz, bei dem die Fläche des Auslaßsitzes den Reaktionskolben bildet (Figuren 8, 9).

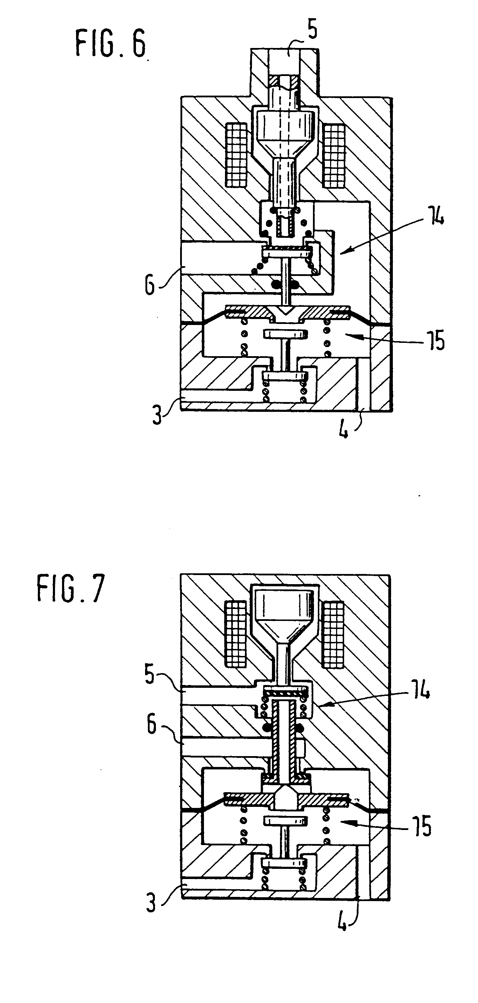

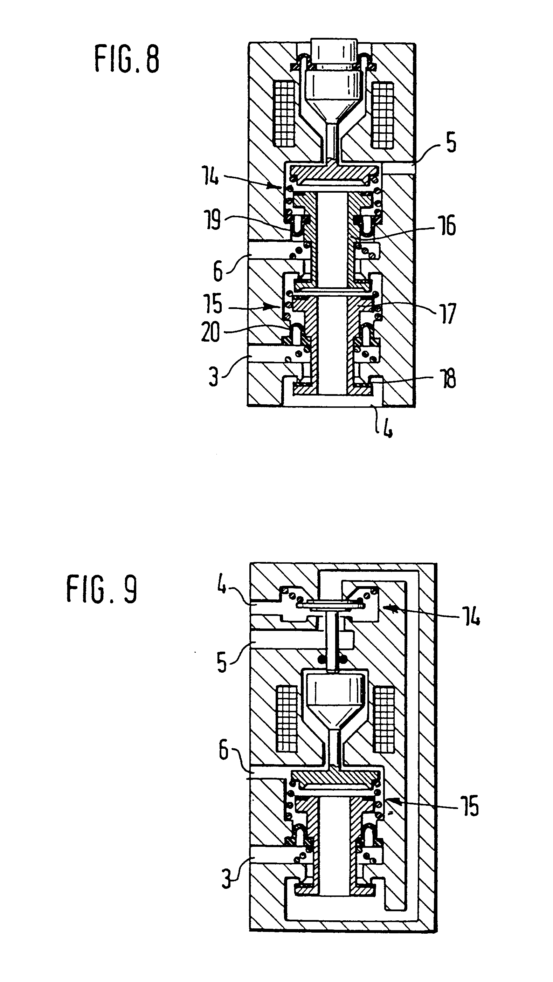

In Verbindung mit dem Druckschaltventil (Proportionalventil) stellt das Rückhalteventil bei stromlosem Magneten mit mechanischen Mitteln (z.B. Federn oder Druckluft-Unterstützung) die Verbindung vom pneumatischen Rückhaltekreis zum Verbraucher (Relaisventil, Bremszylinder) her. Das beim Betätigungshub des Magneten mitgeschaltete Rückhalteventil kann, bezogen auf die Leitungsführung, dem Druckschaltventil vor- oder nachgeschaltet sein. Auch bezogen auf den Magneten sind unterschiedliche Anordnungen des Rückhalteventils ("vor" dem Magneten oder "zwischen" Magnet und Druckschaltventil) möglich. Entsprechend den geschalteten Anschlüssen (Figur 1, 2, 3) kann das Rückhalteventil in der vorgeordneten Version zwischen Rückhaltekreis und dem Vorrat oder der Entlüftung umschalten, abgebildet sind als Beispiel Rückhaltekreis/Entlüftung (Figur 4, 6, 7, 8); in der nachgeordneten Version zwischen Rückhaltekreis und dem vom Druckschaltventil ausgesteuerten Druck (Figur 4, 9). Ferner kann die Ausgestaltung des Rückhalteventils mit einer "Überschneidung" (Figur 4, 5, 8, 9) oder "Überschneidungslos" (Figur 6, 7) erfolgen.

Funktions-Beschreibungen

- Drucksteuerventil nach der Figur 4

Stromlos wird die Verbindung zwischen Rückhaltekreis (Anschluß 5) und Verbraucher (Anschluß 4) über ein Rückhalteventil 14 und Reaktionskolben-Auslaßsitz mittels einer Druckfeder 12 unter einem Reaktionskolben 13 offengehalten. Bei der ersten Stromstufe wechselt das federbelastete Rückhalteventil 14 die Anlagefläche. Der Rückhaltekreis schließt, die Rückseite des Reaktionskolbens 13 wird mit der Entlüftung (Anschluß 6) verbunden. Der Auslaßsitz 11 am Reaktionskolben 13 ist in dieser Stellung noch offen. Weitere Stromerhöhung führt zum Schließen des Auslaßsitzes 11 am Reaktionskolben 13. Eine noch weitere Stromsteigerung öffnet einen Ventilteller 15' eines Druckschaltventils 15 zum Vorrat (Anschluß 3) Druckluft strömt von (3) durch eine unter dem Reaktionskolben 13 liegende Reaktionskammer zum Verbraucheranschluß 4. Druck und Federkraft am Reaktionskolben 13 wiegen sich mit der Magnetkraft aus. Bei ausgewogenen Kräften am Reaktionskolben 13 sind dessen Ein- und Auslaß geschlossen. Zum Druckabbau am Verbraucheranschluß 4 wird der Strom für den Magneten gesenkt.

- Drucksteuerventil nach Figur 5
(entsprechende Teile tragen die gleichen Bezugszahlen wie in Figur 4)

Gegenüber der Figur 4 ist hier das Rückhalteventil 14 "nachgeschaltet", ist aber "vor" dem Magneten angeordnet. Das Rückhalteventil 14 überwacht direkt die Verbindung zwischen Rückhaltekreis und Verbraucheranschluß 4. Die Rückseite des Reaktionskolbens 13 ist ständig an die Entlüftung 6 angeschlossen. Bei der ersten Stromstufe wechselt das federbelastete Rückhalteventil 14 die Anlagefläche. Die Verbindung Rückhaltekreis zum Anschluß 4 wird zur elektrischen Druckeinregelung unterbrochen. Sonst ist die Funktion ähnlich wie bei Figur 4 beschrieben.

- Drucksteuervventil nach Figur 6

Im Unterschied zur Figur 4 sitzt hier das Rückhalteventil 14 zwischen Magnet und Reaktionskolben 13. Die Luft aus dem Rückhaltekreis strömt durch den Magneten über das offene Sitzventil und den Reaktionskolben 13 zum Anschluß 4 zum Verbraucher. Überschneidungsfrei wird mit der ersten Stromstufe der Rückhaltekreis getrennt und der Reaktionskolben 13 an die Entlüftung angeschlossen. Sonstige Funktion wie Figur 4 bzw. 5.

- Drucksteuerventil nach Figur 7

Variante der Ausführung des Rückhalteventils 14 in Gestalt und Kanalführung von Figur 6.

- Drucksteuerventil nach Figur 8

Diese Bauart ist prinzipiell identisch mit der nach der Figur 7. Jedoch ist hier die Ventilausführung durch Axialbohrungen entlastet und durch diese entlastete Ventilausführung ergibt sich eine andere Gestalt der Ventil-Einzelteile. Stromlos gelangt der Druck aus dem Rückhaltekreis (Anschluß 5) über den inneren Kanal des Rückhalteventils 14 und des Druckschaltventils 15 zum Verbraucheranschluß 4. Wird der Magnet bestromt, dann wird der obere Sitz geschlossen, der Rückhaltekreis ist abgekopppelt. Ein oberes Ventilrohr 16 wird nach unten verschoben und öffnet an seinem unteren Ende die Verbindung zur Entlüftung (Anschluß 6). Bei weiterer Bestromung legt sich das obere Ventilrohr 16 auf ein unteres Ventilrohr 17, so daß nun auch dieser Auslaßsitz geschlossen wird. Steigt der Strom nochmals, dann wird ein (unterer) Einlaßsitz 18 geöffnet und Druckluft gelangt vom Vorratsanschluß 3 zum Verbraucheranschluß 4. Der ausgesteuerte Druck wirkt der Magnetkraft entgegen. Der Einlaßsitz 18 schließt wieder. Bei nachlassendem Strom bewegt sich der Magnet und das obere Ventilrohr 16 als Verbund geringfügig nach oben, so daß am unteren Ventilrohr 17 der obere Auslaßsitz geöffnet wird. Sind die Ventilsitz-Durchmesser und die wirksamen Durchmesser von Abdichtmembranen 19 und 20 identisch, dann sind die Ventile druckausgeglichen.

- Druckventil nach Figur 9

Die Ausführung ist im wesentlichen gleich der nach der Figur 5. Das Rückhalteventil 14 ist "vor" dem Magneten angeordnet, entscheidet aber erst nach dem Magneten zwischen ausgesteuertem Druck und dem Rückhaltekreis. Nach dem Umschalten des Rückhalteventils 14 regelt der untere Ventilteil (Druckhalteventil 15) wie bei Figur 8 den Druck ein. Druck am Verbraucheranschluß 4 wird aus dem Vorratsbehälter (Anschluß 3) erhöht und zum Außenluftanschluß 6 abgelassen. Sind beide Ventilsitze geschlossen, wird der Druck gehalten.

Der Vorteil der erfindungsgemäßen Ventilbauarten liegt darin, daß alle Schaltstellungen und alle Funktionen der in den Figuren 1 bis 9 dargestellten Drucksteuerventile mit nur einem einzigen Elektromagneten erstellbar sind.

Einer Weiterbildung des Drucksteuerventils nach den Ansprüchen 1 bis 4 liegt das Problem zugrunde, daß zum Zwecke einer redundanten Ansteuerung eines Verbrauchers zwei meist unterschiedliche Drücke aufweisende Druckquellen alternativ mit dem Verbraucher verbunden werden sollen.

Ein solches Problem besteht z.B. bei elektropneumatischen Mehrkreis-Bremsanlagen, bei denen ein elektrisch angesteuerter Bremskreis wegen seiner schnellen Signalübertragung der bevorzugte Kreis ist und ein pneumatisch angesteuerter zweiter Bremskreis einen lediglich zur Absicherung durchgeschalteten Rückhalte-Kreis darstellt.

Der Erfindung liegt also desweiteren die Aufgabe zugrunde, ein Drucksteuerventil mit den Merkmalen der Ansprüche 1 bis 4 so weiterzubilden, daß es mit einem einzigen Proportionalmagneten bestückt alternativ beide Druckquellen, elektropneumatisch bzw. elektrisch steuern kann.

Diese Aufgabe wird gemäß der Erfindung durch die kennzeichnenden Merkmale der Ansprüche 1 bis 8 gelöst.

Dabei ist es von besonderem Vorteil, daß die besondere Ansteuerung des Verbrauchers auch für eine achslastabhängige (ALB) und/oder eine Blockierschutz-Steuerung verwendbar ist. Z.B. wird bei einem aus Zugwagen und Anhänger bestehenden Wagenzug ohne elektrisches Bremssignal vom Zugfahrzeug zum Anhänger, während eines ABS-Zyklus, wenn der Druck in den Bremszylindern wieder aufgebaut wird, eine zwischenzeitlich durch den Fahrer gelöste Bremse automatisch erkannt. Dann strömt vom Rückhalte-Steuerkreis keine Luft mehr zum Verbraucher. Außerdem kann ohne elektrisches Bremssignal vom Zugfahrzeug zum Anhänger, sofern der Anhänger für ABS stromversorgt ist, auch in einem pneumatisch gesteuerten Zweig der Druck zusätzlich elektronisch, z.B. achslastabhängig moduliert werden.

Ein solches Ausführungsbeispiel der Erfindung ist in den Figuren 10 und 11 dargestellt und in der nachfolgenden Beschreibung näher erläutert. Die Figur 10 zeigt ein elektro-pneumatisches Mehrwege-Schaltventil im Schnitt und die Figur 11 stellt ein Schaltsymbol des Ventils nach der Figur 10 dar.

Beschreibung des Ausführungsbeispiels nach den Figuren 10 und 11

Ein elektro-pneumatisches Mehrwege-Drucksteuerventil 101 ist zwischen zwei Druckquellen 102 und 103 und einem Verbraucher 104 sowie einer Außenluft-Verbindung 105 angeordnet. Die eine Druckquelle 102 ist nicht direkt an das Drucksteuerventil 101 angeschlossen, vielmehr ist noch ein Trittplattenbremsventil als Bremswertgeber 106 dazwischengeschaltet.

Der Bremswertgeber 106 ist als Zweikreis-Bremsventil ausgebildet, das mit einem elektrischen Geberteil 107 einen elektro-pneumatischen Steuerkreis I und mit einem pneumatischen Ventilteil 108 einen rein pneumatischen Steuerkreis II bedient. Der Verbraucher 104 ist, wie dargestellt, als Relaisventil ausgeführt, er kann aber auch als Bremszylinder ausgebildet sein.

Im Drucksteuerventil 101 ist eine Spule 110 angeordnet, in die ein Anker 111 eingesetzt ist, der an seinen beiden Enden je ein Schließglied 112 bzw. 113 je eines als Doppelsitzventil ausgebildeten Einzelventils 114 bzw. 115 trägt. Jedes Schließglied 112 und 113 dient zum Überwachen eines Durchflusses durch einen Axialkanal 116 bzw. 117, der in je einem federbelasteten Schließkörper 118 bzw. 119 vorgesehen ist. Jeder Schließkörper 118 und 119 gleitet in einem Dichtring und hat einen flachen Schließring 120 bzw. 121, mit dem er einen gehäusefesten Ringsitz 122 bzw. 123 dicht abdekken kann und einen Schaft 124 bzw. 125, mit dem er in dem Dichtring gleitet.

Das in der Figur 10 oben dargestellte Einzelventil 114 durchdringt mit seinem Schließkörper-Schaft 124 eine Kammer 126, die an eine Leitung 127 angeschlossen ist, die Verbindung hat mit dem Geberteil 108, und das in der Zeichnung unten dargestellte Einzelventil 115 durchdringt mit seinem Schließkörper-Schaft 125 eine Kammer 128, die an eine Leitung 129 angeschlossen ist, die Verbindung mit der Druckquelle 103 hat.

Der Anker 111 ist so in einer Gehäusebohrung 130 geführt, daß Luft an seiner Außenfläche entlang von einem Einzelventil zum anderen Einzelventil strömen kann. Zu diesem Zweck kann er aber auch mit axialen Durchbrüchen 131 versehen sein, wie gestrichelt dargestellt ist. Die Spule 110 ist derart beschaffen, daß sie mit zwei Strombereichen arbeitet und in jedem Strombereich je nach Bestromung den Anker 111 in mehrere Positionen bringen kann, d.h. der Elektromagnet ist als doppelter Proportionalmagnet ausgebildet. Eine Stromversorgung 133, 134 ist über ein Steuergerät 132 geführt, an das Sensoren 135 angeschlossen sind, die beispielsweise als Druck- oder Lastsensoren ausgebildet sein können.

Wirkungsweise

Stromlos ist die Verbindung vom Bremswertgeber 106 zum Verbraucher 104 offen. Die vom Bremswertgeber 106 über den Steuerkreis II kommende Luft kann ungehindert zum Verbraucher 104 und wieder zum Bremswertgeber 106 zurückströmen.

In einem niedrigen Strombereich arbeitet der Anker 111 mit dem oberen Doppelsitzventil 114 zusammen. Wird der Strom, über das Steuergerät 132, in diesem ersten Bereich eingeschaltet, wird die genannten Verbindung unterbrochen. Bei Stromsteigerung geht der Anker 111 weiter nach unten, das Ventil 120/122 schließt und das Schließglied 113 öffnet den Axialkanal 116. Luft aus dem Verbraucher 104 wird am Anker 111 vorbei über den Axialkanal 117 im Ventil 115 zum Außenluftanschluß 105 und von dort zur Atmosphäre abgelassen. Bei Reduzierung des Stroms wird schließlich der Verbraucher 104 wieder an den pneumatischen Ventilteil 108 des Bremswertgebers 106 angeschlossen.

In einem zweiten, stärkeren Strombereich geht der Anker 111 weiter nach unten als zuerst beschrieben. Nun arbeitet das zweite, (untere) Doppelsitzventil 115.

Zuerst wird von dem Schließglied 112 des Ankers 111 der Axialkanal 117 verschlossen, so daß die Außenluftverbindung abgeriegelt ist. Dann wird der Schließkörper 119 von seinem Sitz 123 abgehoben, wodurch die Verbindung zur Druckquelle 103 geöffnet wird. So kann Druckluft von der Druckquelle 103 an der Mantelfläche des Ankers 111 vorbei und durch den Axialkanal 116 des (oberen) Doppelsitzventils 114 hindurch zum Verbraucher 104 strömen. Beim Absenken des Stromes wird zunächst der Durchgang von der Druckquelle 103 zum Verbraucher 104 gesperrt und dann wird die Entlüftung vom Verbraucher 104 zum Außenluftanschluß 105 wieder freigegeben.

In der Figur 11 ist das Schaltsymbol des Drucksteuerventils 101 dargestellt. Es ist zu erkennen, daß zwischen zwei Arbeitsbereichen A und B eine (mittlere) Schaltstellung liegt, die für beide Bereiche A und B gilt und bei der das Drucksteuerventil 101 - wie oben beschrieben - Verbindung zur Außenluft hat.

Das beschriebene Drucksteuerventil ist vorteilhaft anwendbar in elektronisch geregelten Bremsanlagen mit pneumatischem Rückhaltekreis. Den Druck in dem Verbraucher 104 kann es z.B. in Verbindung mit den Sensoren 135 (Drucksensor, Lastsensor) sowohl vom pneumatischen Rückhaltekreis II als auch direkt vom Vorratsbehälter 103 (Steuerkreis I) aus nach beiden Richtungen (aufbauend und abbauend) regeln.

Die Druckregelung für beide Energiequellen (Vorratsbehälter 102 und 103) ist besonders bei ALB- und/oder ABS-Funktion vorteilhaft, wenn der Sollwert für den elektrisch einzuregelnden Bremsdruck vom elektrischen Geberteil 107 des Bremswertgebers 106 nicht vorhanden ist. Dies kann z.B. der Fall sein, wenn das Drucksteuerventil 101 in einer Anhänger-ELB eingesetzt ist, das Zugfahrzeug aber keine ELB hat, sondern den Anhänger nur für eine Blockierschutzüberwachung (ABS) mit Spannung versorgt. Während eines ABS-Zyklus wird dann, sobald der Druck in den Bremszylindern wieder aufgebaut wird, eine zwischenzeitlich durch den Fahrer gelöste Bremse automatisch erkannt. Von der Leitung 127 strömt in einem solchen Fall keine Luft mehr zum Verbraucher 104.

Dies entspricht dann wieder der Arbeit einer Blockierschutzeinrichtung in konventionellen Bremsanlagen. Wird im Anhänger der pneumatische Druck aus dem Steuerkreis II sensiert, kann in Verbindung mit weiteren Sensoren (z.B. Achslast, Bremsverschleiß, Bremsentemperatur) auch der pneumatische Steuerkreis II elektronisch geregelt werden, bevor das ABS wirksam wird.

**Patentansprüche**

1.  Drucksteuerventil für eine elektro-pneumatische Bremsanlage für Nutzkraftfahrzeuge, das mit einem Elektromagneten zu seiner Betätigung bestückt ist und das mehrere Ventilglieder für die Auswahl zwischen einem pneumatisch eingesteuerten Druck und einem elektrisch geregelten oder ebenfalls gesteuerten Druck aufweist, dadurch gekennzeichnet, daß das Drucksteuerventil (1) aus zwei Ventilgruppen (14, 15) besteht, von denen eine (15) ein Drei-Stellungs-Druckschaltventil zum Einregeln eines Bremsdruckes und die andere ein dem ersten vor- oder nachgeschaltetes Rückhalteventil (14) ist und daß beide Ventilgruppen (14, 15) von einem einzigen Elektromagneten betätigbar sind.

2.  Drucksteuerventil nach Anspruch 1, dadurch gekennzeichnet, daß beide Ventilgruppen (Druckschaltventil 15, Rückhalteventil 16) gleichachsig hintereinander angeordnet sind.

3.  Drucksteuerventil nach Anspruch 1 oder 2, dadurch gekenzeichnet, daß der Magnet zwischenden beiden Ventilgruppen (Druckschaltventil 15, Rückhaltevnetil 14) angeordnet ist (Figuren 4, 5, 9).

4.  Drucksteuerventil nach einem der Ansprüche 1 bis 3, dadurch gekennzeichnet, daß beide Ventilgruppen (Druckschaltventil 15, Rückhalteventil 14) als Doppelsitzventil ausgebildet sind.

5.  Drucksteuerventil nach einem der Ansprüche 1 bis 4, dadurch gekennzeichnet, daß das Drucksteuerventil (101) zwei eingangsseitige Anschlüsse (Leitungen 127 und 129) zur Druckversorgung (102, 103) aufweist, von denen der eine Anschluß über das erste (114) der beiden Einzelventile (114, 115) unmittelbar an einen Verbraucher (104) anschließbar ist, der andere dagegen über eine Hintereinanderschaltung beider Einzelventile (114 und 115) mit demselben Verbraucher (104) verbindbar ist.

6.  Drucksteuerventil nach Anspruch 5, dadurch gekennzeichnet, daß eine Außenluftverbindung (105) des Verbrauchers (104) über beide Einzelventile (114, 115) und über den Anker (111) des Magneten geführt ist.

7.  Drucksteuerventil nach Anspruch 5 oder 6, dadurch gekennzeichnet, daß es zum Schalten zweier Kreise (I, II) als Fünfstellungsventil (Figur 11) ausgebildet ist, von denen die mittlere, dritte Stellung für beide Kreise (I, II) nutzbar ist.

8.  Drucksteuerventil nach Anspruch 7, dadurch gekennzeichnet, daß der eine Kreis (II) ein über ein Betriebsbremsventil (106) bedienter Rückhalte-Steuerkreis und der andere Kreis (I) ein unmittelbar an einen Vorratsbehälter (103) angeschlossener, elektrische, Vorzugs-Steuerkreis ist.

# FIG. 1

# FIG. 2

# FIG. 3

FIG. 4

FIG. 5

FIG. 6

FIG. 7

FIG. 8

FIG. 9

FIG. 10

FIG. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 240 274   (BOSCH)<br>* das ganze Dokument *<br>— — — | 1 | B 60 T 8/36<br>B 60 T 13/68<br>F 16 K 31/06 |
| A | DE-A-3 215 475   (BOSCH)<br>* Zusammenfassung; Figur 3 *<br>— — — | 1 | |
| A | DE-U-8 806 867   (MÜLLER)<br>* das ganze Dokument *<br>— — — | 1 | |
| A | DE-A-3 111 716   (SCHOLZ)<br>* Seite 6, Zeile 24 - Seite 1023; Figur 1 *<br>— — — | 1 | |
| A | EP-A-0 160 750   (BOSCH)<br>* Zusammenfassung; Figur 1 *<br>— — — | 1 | |
| A | DE-U-1 951 376   (HERION)<br>* Seite 4, Zeilen 18 - 20; Figur 1 *<br>— — — — — | 3 | |

**RECHERCHIERTE SACHGEBIETE (Int. Cl.5)**

B 60 T
F 16 K

Der vorliegende Recherchenbericht wurde für alle Patentansprüche erstellt

| Recherchenort | Abschlußdatum der Recherche | Prüfer |
|---|---|---|
| Berlin | 13 Dezember 91 | BLURTON M D |